# EUROPEAN PATENT SPECIFICATION

(11) **EP 4 381 842 B1**
(45) Date of publication and mention of the grant of the patent: **30.07.2025**
(21) Application number: 22768466.9
(22) Date of filing: 03.08.2022
(51) Int. Cl.: H04W 64/00, H04L 5/00, G01S 5/02

(54) **METHODS FOR RESOURCE MAPPING AROUND POSITIONING REFERENCE SIGNALS**
VERFAHREN ZUR RESSOURCENZUORDNUNG UM POSITIONIERUNGSREFERENZSIGNALE HERUM
PROCÉDÉS DE MAPPAGE DE RESSOURCES AUTOUR DE SIGNAUX DE RÉFÉRENCE DE POSITIONNEMENT

(30) Priority: 06.08.2021 US 202163230365 P
(43) Date of publication of application: 12.06.2024
(73) Proprietor: Telefonaktiebolaget LM Ericsson (publ), 164 83 Stockholm (SE)
(72) Inventor: MURUGANATHAN, Siva, Stittsville, Ontario K2S 0R3 (CA); ERNSTRÖM, Per, 117 50 Stockholm (SE); SHREEVASTAV, Ritesh, 194 47 Upplands Väsby (SE); MUNIER, Florent, 426 53 Västra Frölunda (SE)
(74) Representative: Ericsson
(86) International application number: PCT/IB2022/057226
(87) International publication number: WO 2023/012703

(56) References cited:
- EP-A1- 3 965 347
- WO-A1-2020/221042
- WO-A1-2021/159852
- MODERATOR (HUAWEI): "FL summary #4 of 8.5.4 latency improvements for DL and DL+UL methods", vol. RAN WG1, no. e-Meeting; 20210510 - 20210527, 27 May 2021 (2021-05-27), XP052015740, Retrieved from the Internet <URL:https://ftp.3gpp.org/tsg_ran/WG1_RL1/TSGR1_105-e/Docs/R1-2106183.zip R1-2106183.docx> [retrieved on 20210527]

## Description

### CROSS REFERENCE TO RELATED APPLICATIONS

This application claims the benefit of U.S. Provisional Application No. 63/230,365 filed on August 6, 2021.

### TECHNICAL FIELD

The present disclosure generally relates to wireless communications and wireless communication networks.

### INTRODUCTION

Standardization bodies such as Third Generation Partnership Project (3GPP) are studying potential solutions for efficient operation of wireless communication in new radio (NR) networks. The next generation mobile wireless communication system 5G/NR will support a diverse set of use cases and a diverse set of deployment scenarios. The later includes deployment at both low frequencies (e.g. 100s of MHz), similar to LTE today, and very high frequencies (e.g. mm waves in the tens of GHz). Besides the typical mobile broadband use case, NR is being developed to also support machine type communication (MTC), ultra-low latency critical communications (URLCC), side-link device-to-device (D2D) and other use cases.

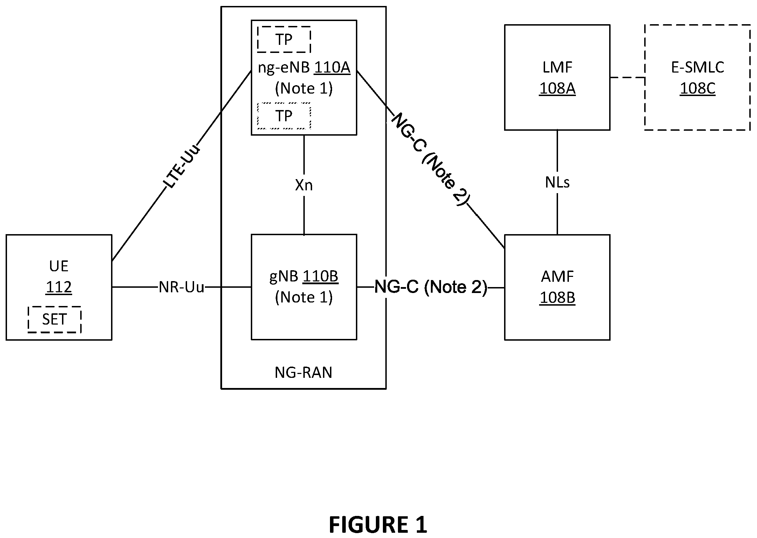

Positioning and location services have been topics in LTE standardization since 3GPP Release 9. An objective was to fulfill regulatory requirements for emergency call positioning but other use case like positioning for Industrial Internet of Things (I-IoT) are also considered. Positioning in NR is supported by the example architecture shown in Figure 1. LMF 108A represents the location management function entity in NR. There are also interactions between the LMF 108A and the gNodeB 110 via the NRPPa protocol. The interactions between the gNodeB 110 and the device (UE) 112 are supported via the Radio Resource Control (RRC) protocol, while the location node 108A interfaces with the UE 112 via the LTE positioning protocol (LPP). LPP is common to both NR and LTE technologies. Other network nodes, such as Access and Mobility Management Function (AMF) 108B and evolved Serving Mobile Location Center (e-SMLC) 108C, may be involved in positioning support.

Note 1: The gNB 110B and ng-eNB 110A may not always both be present.

Note 2: When both the gNB 110B and ng-eNB 110A are present, the NG-C interface is only present for one of them.

In the legacy LTE standards, the following techniques are supported:
- Enhanced Cell ID. Essentially cell ID information to associate the device to the serving area of a serving cell, and then additional information to determine a finer granularity position.
- Assisted GNSS. GNSS information retrieved by the device, supported by assistance information provided to the device from E-SMLC
- OTDOA (Observed Time Difference of Arrival). The device estimates the time difference of reference signals from different base stations and sends to the E-SMLC for multilateration.
- UTDOA (Uplink TDOA). The device is requested to transmit a specific waveform that is detected by multiple location measurement units (e.g. an eNB) at known positions. These measurements are forwarded to E-SMLC for multilateration.

The NR positioning for Release 16, based on the 3GPP NR radio-technology, is positioned to provide added value in terms of enhanced location capabilities. The operation in low and high frequency bands (i.e. below and above 6GHz) and utilization of massive antenna arrays provide additional degrees of freedom to substantially improve the positioning accuracy. The possibility to use wide signal bandwidth in low and especially in high bands brings new performance bounds for user location for well-known positioning techniques based on OTDOA and UTDOA, Cell-ID or E-Cell-ID etc., utilizing timing measurements to locate a UE.

In NR Release 16, several positioning features have been specified including reference signals, measurements, and positioning methods.

### Reference signals:

- A new downlink (DL) reference signal, the NR DL Positioning Reference Signal (PRS) was specified. A benefit of this signal in relation to the LTE DL PRS is the increased bandwidth, configurable from 24 to 272 RBs, which gives a big improvement in Time of Arrival (TOA) accuracy. The NR DL PRS can be configured with a comb factor of 2, 4, 6 or 12. Comb-12 allows for twice as many orthogonal signals as the comb-6 LTE PRS. Beam sweeping is also supported on NR DL PRS in Rel-16.
- A new uplink (UL) reference signal, based on the NR UL SRS was introduced and called "SRS for positioning". The Release 16 NR SRS for positioning allows for a longer signal, up to 12 symbols (compared to 4 symbols in Rel. 15 SRS), and a flexible position in the slot (only last six symbols of the slot can be used in Rel. 15 SRS). It also allows for a staggered comb RE pattern for improved TOA measurement range and for more orthogonal signals based on comb offsets (comb 2, 4 and 8) and cyclic shifts. The use of cyclic shifts longer than the OFDM symbol divided by the comb factor is, however, not supported by Rel. 16 despite that this is the main advantage of comb-staggering at least in indoor scenarios. Power control based on neighbor cell SSB/DL PRS is supported as well as spatial QCL relations towards a CSI-RS, an SSB, a DL PRS or another SRS.

### Positioning techniques

NR positioning supports the following methods:
Methods already in LTE and enhanced in NR:
- DL TDOA
- E-CID
- RAT independent methods (based on non-3GPP sensors such as GPS, pressure sensors, Wifi signals, Bluetooth, etc).
- UL TDOA

Newly introduced methods in NR:
- Multicell RTT: the LMF collects RTT (round trip time) measurement as the basis for multilateration
- DL angle of departure (AoD) and UL angle of arrival (AoA), where multilateration is done using angle and power (RSRP) measurements

### Measurements:

In NR Rel. 16, the following UE measurements are specified:
- DL RSTD, allowing for e.g. DL TDOA positioning
- Multi cell UE Rx-Tx Time Difference measurement, allowing for multi cell RTT measurements
- DL PRS RSRP

In NR Rel. 16, the following gNB measurements are specified:
- UL-RTOA, useful for UL TDOA positioning
- gNB Rx-Tx time difference, useful for multi cell RTT measurements
- UL SRS-RSRP
- AoA and ZoA

### Signal configurations:

A new DL reference signal, the NR DL PRS was specified in NR Rel. 16. A benefit of this signal in relation to the LTE DL PRS is the increased bandwidth, configurable from 24 to 272 RBs, which gives a big improvement in TOA accuracy. The NR DL PRS can be configured with a comb factor of 2, 4, 6 or 12. Comb-12 allows for twice as many orthogonal signals as the comb-6 LTE PRS. Beam sweeping is also supported on NR DL PRS in Rel-16.

In NR Rel. 16, the DL PRS is configured by each cell separately, and the location server (LMF) collects all configuration via the NRPPa protocol, before sending an assistance data (AD) message to the UE via the LPP protocol.

Rel-16 NR DL PRS is organized in a 3-level hierarchy:
- PRS frequency layer: gathers PRS resource sets from (potentially) multiple base station, having common parameters in common. If two resource sets are in the same frequency layer, they:
   - Operate in the same band with the same subcarrier spacing
   - Have the same comb factor
   - Have the same starting PRB and bandwidth
- PRS Resource set: corresponds to a collection of PRS beams (resources) which are all originating from the same Transmission and reception point (TRP). All resource in the same set have the same comb factor
- PRS resource: correspond to a beam transmitting the PRS

In NR Rel. 16, enhancements of the NR UL SRS were specified. The Rel. 16 NR SRS for positioning allows for a longer signal, up to 12 symbols (compared to 4 symbols in Rel. 15), and a flexible position in the slot (only last six symbols of the slot can be used in Rel. 15). It also allows for a staggered comb RE pattern for improved TOA measurement range and for more orthogonal signals based on comb offsets (comb 2, 4 and 8) and cyclic shifts. The use of cyclic shifts longer than the OFDM symbol divided by the comb factor is, however, not supported by Rel. 16 despite that this is the main advantage of comb-staggering at least in indoor scenarios. Power control based on neighbor cell SSB/DL PRS is supported as well as spatial QCL relations towards a CSI-RS, an SSB, a DL PRS or another SRS.

The DL PRS is configured by each cell separately, and the location server (LMF) collects all configuration via the NRPPa protocol, before sending an assistance data (AD) message to the UE via the LPP protocol. In the uplink, the SRS signal is configured in RRC by the serving gnodeB, which in turns forward appropriate SRS configuration parameters to the LMF upon request.

Similar to LTE, in NR a unique reference signal is transmitted from each antenna port at the gNB for downlink channel estimation at a UE. Reference signals for downlink channel estimation are commonly referred to as channel state information reference signal (CSI-RS).

A CSI-RS signal is transmitted on a set of time-frequency resource elements (REs) associated with an antenna port. For channel estimation over a system bandwidth, CSI-RS is typically transmitted over the whole system bandwidth. The set of REs used for CSI-RS transmission is referred to as CSI-RS resource. From a UE point of view, an antenna port is equivalent to a CSI-RS that the UE shall use to measure the channel. Up to 32 (i.e. *Nₜₓ* = 32) antenna ports are supported in NR and thus 32 CSI-RS signals can be configured for a UE.

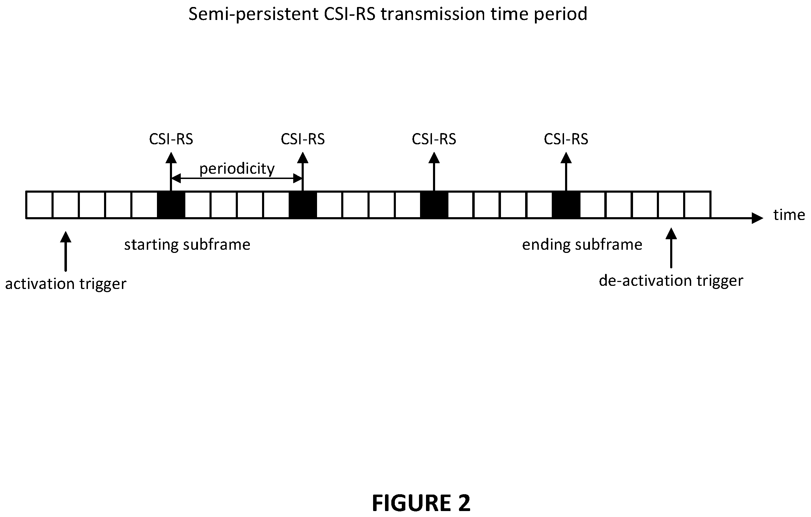

In NR, the following three types of CSI-RS transmissions are supported:
- Periodic CSI-RS Transmission: CSI-RS is transmitted periodically in certain subframes or slots. This CSI-RS transmission is semi-statically configured using parameters such as CSI-RS resource, periodicity and subframe or slot offset similar to LTE.
- Aperiodic CSI-RS Transmission: This is a one-shot CSI-RS transmission that can happen in any subframe or slot. Here, one-shot means that CSI-RS transmission only happens once per trigger. The CSI-RS resources (i.e., the resource element locations which consist of subcarrier locations and OFDM symbol locations) for aperiodic CSI-RS are semi-statically configured. The transmission of aperiodic CSI-RS is triggered by dynamic signaling through PDCCH. The triggering may also include selecting a CSI-RS resource from multiple CSI-RS resources.
- Semi-Persistent CSI-RS (SP CSI-RS) Transmission: Similar to periodic CSI-RS, resources for semi-persistent CSI-RS transmissions are semi-statically configured with parameters such as periodicity and subframe or slot offset. However, unlike periodic CSI-RS, dynamic signaling is needed to activate and possibly deactivate the CSI-RS transmission. An example is shown in Figure 2. In NR, activation and deactivation is performed using MAC CE signaling.

### Multiple transmission/reception points (TRP)

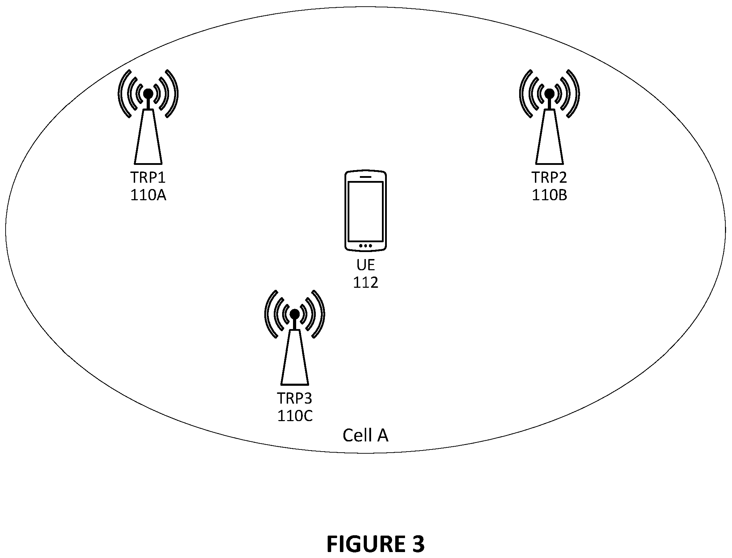

A cell can consist of multiple TRPs with each TRP located in distinct coordinates, an example of which is shown in Figure 3. This sort of configuration is expected to be used in I-IOT scenarios. As an example, one cell with 10, 20 or even more TRPs may be used to cover a complete factory hall.

For positioning, as such, three distinct co-ordinates are required to perform multilateration. With this sort of scenario where a serving cell has multiple TRPs located in distinct co-ordinates, it should be possible to exploit this for positioning.

In NR release 16, the PRS-based measurements (including PRS RSRP, RSTD for OTDOA and UE Rx-Tx for RTT) are all made in the presence of measurement gaps. During a measurement gap, the UE can expect that the network will not transmit any data and thus the UE can tune itself specifically to measure the PRS. For example, to measure PRS (i.e., DL PRS), the UE will potentially utilize a different bandwidth than the active bandwidth part it is configured with to receive data.

Document WO 2020/221042 A1 (and its post-published patent family member EP 3 965 347 A1) may be construed to disclose a method for configuring a positioning reference signal resource, a method for configuring a measurement gap, and a related device. The method includes: determining a resource position of a PRS within a BWP based on a start PRB position of a PRS resource and the number of PRBs; and performing measurement on the resource position.

Document "FL summary #4 of 8.5.4 latency improvements for DL and DL+UL methods", Moderator (Huawei), 3GPP document R1-2106183 may be construed to disclose the summary of the solutions to improve positioning latency for DL and DL+UL methods, in the email discussion assignment in RAN1#105-e. Inter alia, it was proposed that PRS measurement without Measurement Gaps (MGs) subject to UE capability is supported for latency reduction in Rel-17 at least when the DL PRS is [from the serving cell and] inside the active Downlink (DL) Band-Width Part (BWP).

Document WO 2021/159852 A1 constitutes prior art under Art. 54(3) EPC and may be construed to disclose methods and apparatuses for searcher resource coordination between NR mobility based measurement and LTE (E-UTRA) PRS based measurement without measurement gap in EN-DC mode or NE-DC mode. There are also provided for searcher resource coordination between NR PRS measurement and LTE (E-UTRA) PRS measurement without measurement gap in EN-DC mode or NE-DC mode. There further are searcher resource coordination between NR or LTE (E-UTRA) PRS measurement and NR mobility measurement without measurement gap in EN-DC mode or NE-DC mode.

### SUMMARY

It is an object of the present disclosure to obviate or mitigate at least one disadvantage of the prior art.

There are provided methods for configuring reserved resources for positioning purposes. According to the present disclosure, there are provided methods, computer-readable media, a wireless device and an access node according to the independent claims. Further developments are set forth in the dependent claims.

In a first aspect there is provided a method performed by a wireless device. The wireless device can comprise a radio interface and processing circuitry and be configured to receive a configuration message indicating one or more reserved resources, wherein the wireless device can receive downlink data and perform positioning reference signal (PRS) measurements in a reserved resource without a configured measurement gap. The wireless device determines that PRS measurement is prioritized in the reserved resource; and measures at least one PRS in the reserved resource.

In another aspect there is provided a method performed by a network node such as an access node. The access node can comprise a radio interface and processing circuitry and be configured to generating configuration information including one or more reserved resources, wherein a wireless device can receive downlink data and perform positioning reference signal (PRS) measurements in a reserved resource without a configured measurement gap. The access node transmits, to the wireless device, a configuration message indicating the one or more reserved resources. The access device transmits, to the wireless device, at least one PRS in the reserved resource.

In some embodiments, the configuration message indicates at least one of: a frame number, a subframe number, a slot number, and/or a symbol number where the reserved resource starts. In some embodiments, the configuration message indicates at least one of: a length and/or a periodicity of the reserved resource. In some embodiments, the configuration message indicates a priority between the downlink data reception and the PRS measurement in the reserved resource.

In some embodiments, the downlink data is one of a physical downlink shared channel (PDSCH), a physical downlink control channel (PDCCH), and/or a Channel State Information Reference Signal (CSI-RS).

The wireless device further receives an activation message, transmitted by the access node, indicating to activate at least one of the one or more reserved resources. In some embodiments, the activation message is a Medium Access Control (MAC) control element (CE) and/or a Downlink Control Information (DCI).

In some embodiments, the wireless device further receives downlink data, transmitted by the access node, in resources outside of the reserved resource.

In some embodiments, the access node further receives, from a network node, a request to configure the one or more reserved resources. The request can be received via NRPPa signaling.

The various aspects and embodiments described herein can be combined alternatively, optionally and/or in addition to one another.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures, wherein:
Figure 1 illustrates an example of NR positioning architecture;
Figure 2 illustrates an example of Semi-Persistent CSI-RS transmission;
Figure 3 illustrates an example of multi-TRP in a cell;
Figure 4 is an example communication system;
Figure 5 is an example of scheduled PDSCH mapped around reserved resource for PRS;
Figure 6 is an example of CSI-RS(s) mapped around reserved resource for PRS;
Figure 7a is a signaling diagram of a gNB configuring the UE through RRC signaling;
Figure 7b is a signaling diagram of an LMF configuring the UE through LPP signaling;
Figure 8 is a flow chart illustrating a method which can be performed in a wireless device;
Figure 9 is a flow chart illustrating a method which can be performed in an access node;
Figure 10 is a flow chart illustrating a method which can be performed in a network node;
Figure 11 is a block diagram of an example wireless device;
Figure 12 is a block diagram of an example network node;
Figure 13 is a block diagram of an example host;
Figure 14 is a block diagram illustrating an example virtualization environment; and
Figure 15 is a communication diagram of a host communicating via a network node with a UE.

### DETAILED DESCRIPTION

The embodiments set forth below represent information to enable those skilled in the art to practice the embodiments. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

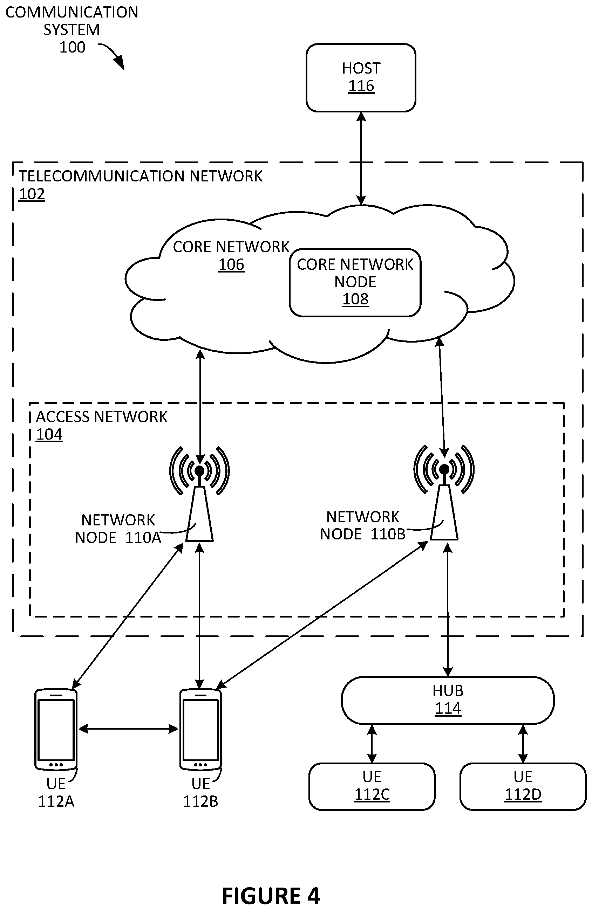

Figure 4 illustrates an example of a communication system 100 in accordance with some embodiments.

In the example, the communication system 100 includes a telecommunication network 102 that includes an access network 104, such as a radio access network (RAN), and a core network 106, which includes one or more core network nodes 108. The access network 104 includes one or more access network nodes, such as network nodes 110A and 110B (one or more of which may be generally referred to as network nodes 110), or any other similar 3rd Generation Partnership Project (3GPP) access node or non-3GPP access point. The network nodes 110 facilitate direct or indirect connection of user equipment (UE), such as by connecting UEs 112A, 112B, 112C, and 112D (one or more of which may be generally referred to as UEs 112) to the core network 106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 100 may include any number of wired or wireless networks, network nodes, UEs, and/or any other components or systems that may facilitate or participate in the communication of data and/or signals whether via wired or wireless connections. The communication system 100 may include and/or interface with any type of communication, telecommunication, data, cellular, radio network, and/or other similar type of system.

The UEs 112 may be any of a wide variety of communication devices, including wireless devices arranged, configured, and/or operable to communicate wirelessly with the network nodes 110 and other communication devices. Similarly, the network nodes 110 are arranged, capable, configured, and/or operable to communicate directly or indirectly with the UEs 112 and/or with other network nodes or equipment in the telecommunication network 102 to enable and/or provide network access, such as wireless network access, and/or to perform other functions, such as administration in the telecommunication network 102.

In the depicted example, the core network 106 connects the network nodes 110 to one or more hosts, such as host 116. These connections may be direct or indirect via one or more intermediary networks or devices. In other examples, network nodes may be directly coupled to hosts. The core network 106 includes one or more core network nodes (e.g. core network node 108) that are structured with hardware and software components. Features of these components may be substantially similar to those described with respect to the UEs, network nodes, and/or hosts, such that the descriptions thereof are generally applicable to the corresponding components of the core network node 108. Example core network nodes include functions of one or more of a Mobile Switching Center (MSC), Mobility Management Entity (MME), Home Subscriber Server (HSS), Location Management Function (LMF), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 116 may be under the ownership or control of a service provider other than an operator or provider of the access network 104 and/or the telecommunication network 102, and may be operated by the service provider or on behalf of the service provider. The host 116 may host a variety of applications to provide one or more service. Examples of such applications include live and prerecorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 100 of Figure 4 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g. 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 102 is a cellular network that implements 3GPP standardized features. Accordingly, the telecommunications network 102 may support network slicing to provide different logical networks to different devices that are connected to the telecommunication network 102. For example, the telecommunications network 102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 112 are configured to transmit and/or receive information without direct human interaction. For instance, a UE may be designed to transmit information to the access network 104 on a predetermined schedule, when triggered by an internal or external event, or in response to requests from the access network 104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 114 communicates with the access network 104 to facilitate indirect communication between one or more UEs (e.g. UE 112C and/or 112D) and network nodes (e.g. network node 110B). In some examples, the hub 114 may be a controller, router, content source and analytics, or any of the other communication devices described herein regarding UEs. For example, the hub 114 may be a broadband router enabling access to the core network 106 for the UEs. As another example, the hub 114 may be a controller that sends commands or instructions to one or more actuators in the UEs. Commands or instructions may be received from the UEs, network nodes 110, or by executable code, script, process, or other instructions in the hub 114. As another example, the hub 114 may be a data collector that acts as temporary storage for UE data and, in some embodiments, may perform analysis or other processing of the data. As another example, the hub 114 may be a content source. For example, for a UE that is a VR headset, display, loudspeaker or other media delivery device, the hub 114 may retrieve VR assets, video, audio, or other media or data related to sensory information via a network node, which the hub 114 then provides to the UE either directly, after performing local processing, and/or after adding additional local content. In still another example, the hub 114 acts as a proxy server or orchestrator for the UEs, in particular in if one or more of the UEs are low energy IoT devices.

The hub 114 may have a constant/persistent or intermittent connection to the network node 110B. The hub 114 may also allow for a different communication scheme and/or schedule between the hub 114 and UEs (e.g. UE 112C and/or 112D), and between the hub 114 and the core network 106. In other examples, the hub 114 is connected to the core network 106 and/or one or more UEs via a wired connection. Moreover, the hub 114 may be configured to connect to an M2M service provider over the access network 104 and/or to another UE over a direct connection. In some scenarios, UEs may establish a wireless connection with the network nodes 110 while still connected via the hub 114 via a wired or wireless connection. In some embodiments, the hub 114 may be a dedicated hub - that is, a hub whose primary function is to route communications to/from the UEs from/to the network node 110B. In other embodiments, the hub 114 may be a non-dedicated hub - that is, a device which is capable of operating to route communications between the UEs and network node 110B, but which is additionally capable of operating as a communication start and/or end point for certain data channels.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell". However, particularly with respect to 5G/NR concepts, beams may be used instead of cells and, as such, it is important to note that the concepts described herein are equally applicable to both cells and beams.

Returning to the discussion of conventional PRS-based measurements made with measurement gaps, in NR Release 17 it was agreed to specify enhancements to enable measuring the DL PRS without the need for measurement gaps. If the bandwidth part of the UE is wide enough to cover the DL PRS bandwidth, the UE can measure the PRS without requesting measurement gaps. However, collision with the data channels and other downlink reference signals is an issue needed to be addressed.

Some solutions have been proposed for handling collision of PRS with data channels and other downlink reference signals. In these solutions, configurable priority indicators are introduced for different data channels and other downlink reference signals. Depending on the value of the indicated priority indicator, the UE would either measure/process the PRS to derive positioning measurements or measure/process/decode data channels and other downlink reference signals. When the UE measures/processes the PRS based on the indicated priority, the UE drops the data channels and other downlink reference signals. Conversely, when the UE measures/processes/decodes data channels and other downlink reference signals based on the indicated priority, the UE drops the PRS.

In these solutions, only one of the following items (i.e., the item with the higher indicated priority) is performed by the UE based on the indicated priority:
- PRS processing, or
- measurement/processing/decoding of data channels and or other reference signals.

The item that is not performed (i.e., the item with the lower indicated priority) is dropped and therefore not processed by the UE.

In some I-IoT use cases, the network may involve ultra-reliable low latency communication (URLLC) support with low latency positioning as an add-on feature. In this scenario, prioritizing only PRS may not make sense. Prioritizing PRS at the expense of dropping URLLC related data channels or reference signals will be expensive since it will hurt the URLLC performance/latency targets. On the other hand, prioritizing URLLC data channels and/or reference signals at the expense of dropping PRS measurements will affect the low latency positioning target. Hence, it is an issue of how to simultaneously ensure URLLC support and low latency positioning.

Certain aspects of this disclosure and their embodiments may provide solutions to these or other challenges. In some embodiments, configuration of reserved resources for PRS are configured from the serving gNB to the UE. If the reserved resources for PRS are periodic, then the reserved resources for PRS can be configured to the UE via RRC signaling. If the reserved resources for PRS are semi-persistent, then the reserved resources for PRS can be activated to the UE via MAC CE signaling. In addition, candidate reserved resource patterns for PRS that may be activated can be configured to the UE via RRC signaling.

If the reserved resources for PRS are aperiodic, then the reserved resources for PRS can be triggered to the UE via DCI signaling. In addition, candidate reserved resource patterns for PRS that may be triggered can be configured to the UE via RRC signaling.

The serving gNB can send data and/or other reference signals in downlink to the UE, wherein the resources allocated to the data and/or other reference signals are resource mapped around the reserved resource(s) for PRS.

The UE can receive one or more DL PRSs in the reserved resources for DL PRS without the need for measurement gaps.

The UE can measure the DL PRSs in the reserved resources and the data/other reference signals in the resources that are mapped around the reserved resources.

The UE can perform data decoding and positioning measurements using DL PRS measurements in a slot. Neither the DL PRS nor data are dropped by the UE.

The UE can perform measurements on other reference signals and positioning measurements using DL PRS measurements in a slot. Neither the DL PRS nor the other reference signal is dropped by the UE.

In other embodiments, the configuration of reserved resources for DL PRS can be performed by the LMF to the UE via LPP signaling. In these alternative embodiments, the LMF can also signal the reserved resources for DL PRS to the serving gNB via NRPPa signaling.

In one embodiment, a reserved resource is defined which is to be used for measuring DL PRS and deriving positioning measurements. The resources for data channels such as PDSCH and PDCCH can be mapped around the reserved resource for DL PRS. Similarly, the resources for other reference signals, such as CSI-RS, can be mapped around the reserved resource. The configuration of reserved resource for measuring DL PRS may include one or more of the following:
- a periodicity of *T_{period}* and slot offset *T_{offset}* in case the reserved resource is periodic in time domain;
- a starting PRB which defines the first PRB of the reserved resource;
- a bandwidth of the reserved resource with granularity of *x* × *PRBs* where *x* is an integer;
- an end PRB which defines the last PRB of the reserved resource;
- a starting symbol within a slot which defines the first symbol within a slot over which the reserved resource is defined;
- a number of consecutive symbols within a slot over which the reserved resource is defined;
- an end symbol within a slot which defines the last symbol within a slot over which the reserved resource is defined.

In one embodiment, the configuration parameters defining the position in frequency and the bandwidth of the reserved resource can be optional and, if they are not present, this indicates that the reserved resource extends over the full system bandwidth.

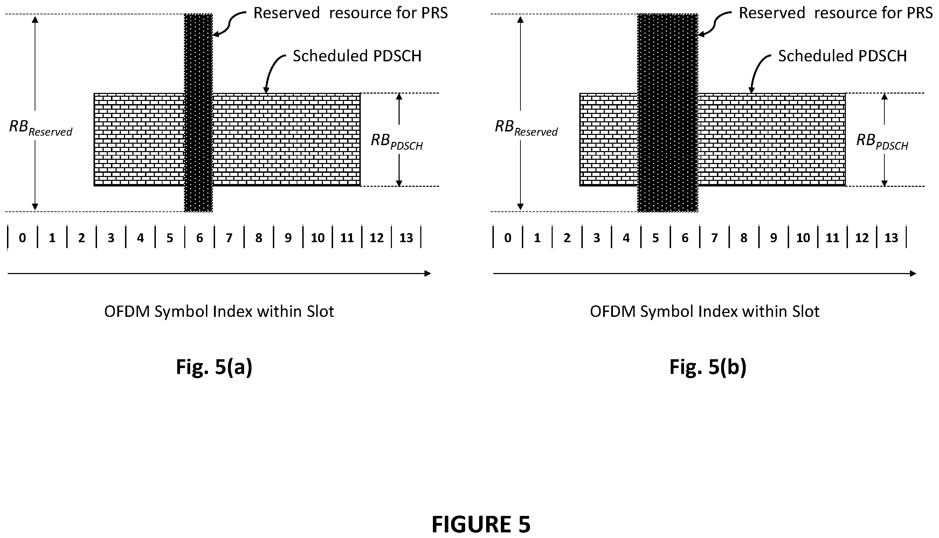

Figure 5 shows examples illustrating PDSCH resource mapping around reserved resource for PRS. In Figure 5(a), the reserved resource for PRS has a starting symbol of 6 within the slot, and a symbol length of 1. The bandwidth of the reserved resource is given by *RB_{Reserved}.* As shown in the figure, PDSCH is scheduled in the same slot from symbols 3 to 11 except for symbol 6 which is allocated for the reserved resource for PRS. In other words, the resource for PDSCH is "mapped around" the reserved resource for PRS. Hence, the reserved resource for PRS can also be considered a PDSCH rate matching resource. In the slot which is shown in Figure 5(a), the UE receives and decodes PDSCH while performing PRS measurement(s) in the same slot. The PRSs are measured in the reserved resource (i.e., symbol 6) and are used to derive positioning measurements (e.g., PRS RSRP, RSTD for OTDOA, and/or UE Rx-Tx for RTT). Since the UE can decode PDSCH and perform positioning measurements, neither the PDSCH nor the PRS is dropped in this embodiment which is beneficial for use cases that involve URLLC support with low latency positioning. Note that the bandwidth of the reserved resource for PRS is shown to be larger than the scheduling bandwidth of the PDSCH in Figure 5(a). However, this embodiment is non-limiting and can also include the case where the bandwidth of the reserved resource for PRS is smaller than the scheduled bandwidth of the PDSCH. In some embodiments, the bandwidth of the reserved resource for PRS is same as the bandwidth of the active bandwidth part of the UE. In an alternative embodiment, the bandwidth of the reserved resource for PRS can be larger than the bandwidth of the active bandwidth part of the UE.

In Figure 5(b), the reserved resource for PRS has a starting symbol of 5 within the slot, and a symbol length of 2. As shown in the figure, PDSCH is scheduled in the same slot from symbols 3 to 11 except for symbols 5-6 which are allocated for the reserved resource for PRS. In the slot which is shown in Figure 5(b), the UE receives and decodes PDSCH while performing PRS measurement(s) in the same slot. The PRSs are measured in the reserved resource (i.e., symbols 5-6) and are used to derive positioning measurements (e.g., PRS RSRP, RSTD for OTDOA, and/or UE Rx-Tx for RTT).

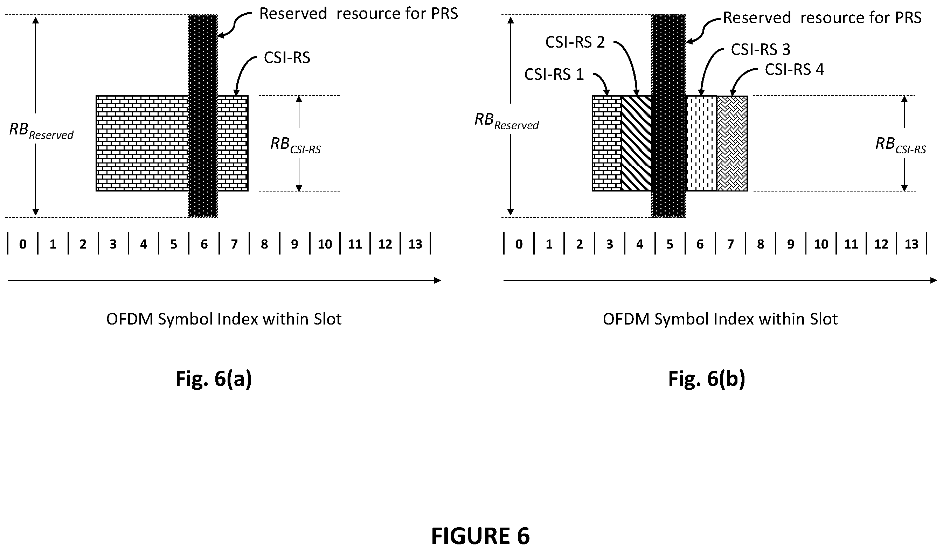

Figure 6 shows examples illustrating resource mapping of CSI-RS around reserved resource for PRS. In Figure 6(a), the reserved resource for PRS has a starting symbol of 6 within the slot, and a symbol length of 1. As shown in the figure, a 4-symbol long CSI-RS is received in the same slot in symbols 3, 4, 5 and 7. Note that CSI-RS is not received in symbol 6 which is allocated for the reserved resource for PRS. In other words, the resource for CSI-RS is mapped around the reserved resource for PRS. In the slot which is shown in Figure 6(a), the UE measures the CSI-RS and computes corresponding CSI while performing PRS measurement(s) in the same slot. The PRSs are measured in the reserved resource (i.e., symbol 6) and are used to derive positioning measurements (e.g., PRS RSRP, RSTD for OTDOA, and/or UE Rx-Tx for RTT). Since the UE can measure CSI-RS, compute CSI, and perform positioning measurements, neither the CSI-RS nor the PRS is dropped in this embodiment which is beneficial for use cases that involve urgent CSI (e.g., CSI for URLLC) along with support for low latency positioning. Note that although the bandwidth of the reserved resource for PRS is shown to be larger than the bandwidth of the CSI-RS (which is denoted by *RB_{CSI-RS}*) in Figure 6(a), this embodiment is non-limiting and can include the case where the bandwidth of the reserved resource for PRS is smaller than the bandwidth of the CSI-RS.

In Figure 6(b), the reserved resource for PRS has a starting symbol of 5 within the slot, and a symbol length of 1. As shown in the figure, 4 different CSI-RS resources (e.g., CSI-RSs 1, 2, 3, and 4) which belong to the same NZP CSI-RS resource set (3GPP TS 38.214) is received in the same slot in symbols 3, 4, 6 and 7. These CSI-RS resources may be transmitted with the same or different downlink spatial domain transmission filters and can be used for identifying the best spatial domain filters (e.g., via L1-RSRP (layer 1 RSRP) reporting as defined in 3GPP TS 38.214). Note that a CSI-RS is not received in symbol 5 which is allocated for the reserved resource for PRS. In other words, the CSI-RS resources corresponding the NZP CSI-RS resource set are mapped around the reserved resource for PRS. In the slot which is shown in Figure 6(b), the UE measures the CSI-RS(s) and computes, for instance, L1-RSRP measurements while performing PRS measurement(s) in the same slot. The PRSs are measured in the reserved resource (i.e., symbol 5) and are used to derive positioning measurements (e.g., PRS RSRP, RSTD for OTDOA, and/or UE Rx-Tx for RTT). Since the UE can measure CSI-RS, compute L1-RSRP, and perform positioning measurements, neither the CSI-RS nor the PRS is dropped in this embodiment which is beneficial for use cases that involve urgent best beam identification (e.g., L1-RSRP reporting for URLLC) along with support for low latency positioning.

In some embodiments, the reserved resource for PRS defined for measuring DL PRS are periodic in the time domain. Hence, the reserved resource configuration contains a periodicity (defined in terms of slots) and a slot offset. A reserved resource occurs every *T_{period}* slots with a slot offset of *T*_{*offse*t}*.*

In other embodiments, the reserved resource for PRS may be configured to the UE but is aperiodically triggered via a DCI. The reserved resource for PRS is only present in a slot which is indicated via DCI. Since a common use case would be to map the resources of dynamically scheduled (via DCI) PDSCH around reserved resources for PRS, in some embodiments, the resourced resource for PRS can be triggered by the downlink DCI (e.g., DCI formats 1_1 and 1_2) that schedules the PDSCH.

In another embodiment, the reserved resource for PRS may be configured to the UE but is activated semi-persistently either via MAC CE or DCI. The semi-persistently activated reserved resource for PRS has a periodicity *T_{period}* slots and a slot offset of *T_{offset}.* Once the semi-persistent reserved resource for PRS is activated, the reserved resource occurs every *T_{period}* slots with a slot offset of *T_{offset}* until it is deactivated. The deactivation of the semi-persistent reserved resource can be performed via a second MAC CE or DCI, which is different from the activating MAC CE or DCI.

In some embodiments, PRS transmissions from multiple TRPs can be received by the UE within the same reserved resource for PRS. For instance, the PRSs transmitted from TRP1 and TRP2 can be multiplexed in the same symbol and separated by different comb offset values. In one embodiment, TRP1 and TRP2 may both belong to the same serving cell. In some other cases, at least one of TRP1 and TRP2 may belong to a non-serving cell (e.g. neighbouring cell).

Although the reserved resources for DL PRS are shown on symbol level in the above embodiments, the reserved resources may be also defined at slot level or sub-slot level. The sub-slot is defined here as a grouping of multiple symbols within a slot. When the reserved resources for DL PRS are defined at slot level or sub-slot level, data and other reference signals from the serving gNB are resource mapped around these reserved resources for DL PRS.

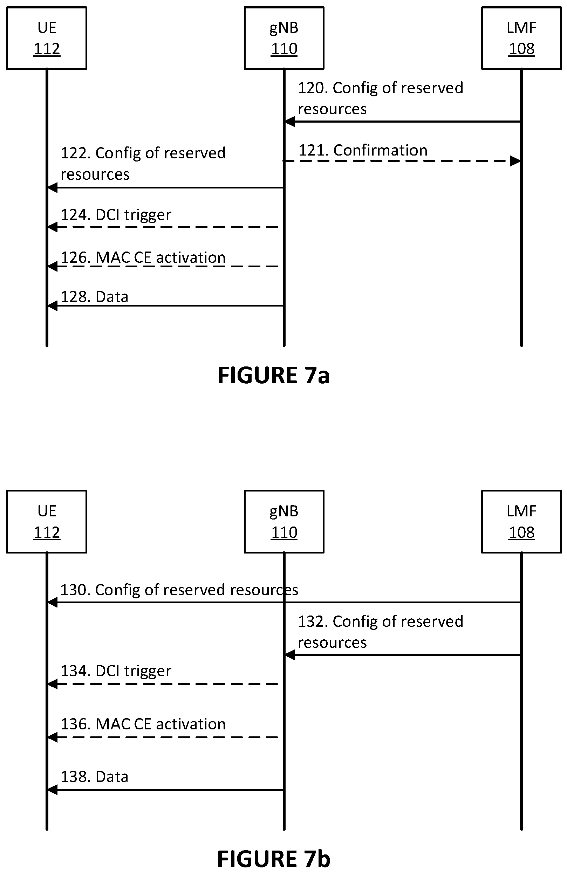

Figure 7a is a signaling diagram illustrating example embodiment where the serving gNB 110 configures the UE 112 through RRC signaling with reserved resources for DL PRS.

Step 120: The LMF sends a recommended configuration of reserved resource(s) for DL PRS to the serving gNB over NRPPa.

Step 121: The serving gNB can send a confirmation of the configuration of reserved resource(s) for DL PRS to the LMF over NRPPa.

Step 122: The serving gNB configures the UE with reserved resources for DL PRS over RRC signaling.

Step 124: The serving gNB triggers/activates the reserved resources for DL PRS for the UE with a DCI. Note that this step is present only when a DCI triggered (e.g., aperiodic) reserved resource for DL PRS has been configured. When reserved resources for DL PRS are periodic or semi-persistent, this step may not be needed.

Step 126: The serving gNB activates the reserved resources for DL PRS for the UE with a MAC CE. Note that this step is present only when a semi-persistent reserved resource for DL PRS has been configured. When reserved resources for DL PRS are periodic or aperiodic, this step may not be needed.

Step 128: The serving gNB sends data to the UE with PDSCH resource mapped around the reserved resources for DL PRS and the UE receives data over PDSCH resource mapped around the reserved resources for DL PRS.

Figure 7b is a signaling diagram illustrating an example embodiment where the LMF 108 configures the UE 112 through LPP signaling with reserved resources for DL PRS.

Step 130: The LMF configures the UE with reserved resources for DL PRS over LPP signaling.

Step 132: The LMF sends the reserved resource configuration for the UE to the serving gNB over NRPPa signaling.

Step 134: The gNB triggers/activates the reserved resources for DL PRS for the UE with a DCI. Note that this step is present only when a DCI triggered (e.g., aperiodic) reserved resource for DL PRS has been configured. When reserved resources for DL PRS are periodic or semi-persistent, this step may not be needed.

Step 136: The serving gNB activates the reserved resources for DL PRS for the UE with a MAC CE. Note that this step is present only when a semi-persistent reserved resource for DL PRS has been configured. When reserved resources for DL PRS are periodic or aperiodic, this step may not be needed.

Step 138: The serving gNB sends data to the UE with PDSCH resource mapped around the reserved resources for DL PRS, and the UE receives data over PDSCH resource mapped around the reserved resources for DL PRS.

Selection of reserved resources for DL PRS

The LMF can determine what reserved resource(s) for DL PRS configuration to configure the UE with/recommend to the serving gNB based on, for example:
- UE capabilities;
- the DL PRS resources/resource sets the UE is configured to utilize for positioning measurements as indicated, for example, in the nr-SelectedDL-PRS-IndexList-r16 IE in assistance data;
- the serving cell of the UE;
- the approximate position of the UE as known by the LMF.

In some embodiments the LMF selects the reserved resources for DL PRS to cover all DL PRS resources/resource sets the UE is configured to perform measurements on.

In some embodiments the LMF selects the reserved resources for DL PRS to cover all DL PRS resources/resource sets the UE is configured to utilize for positioning measurements (as indicated, for example, in the nr-SelectedDL-PRS-IndexList-r16 IE in assistance data) plus some extra resource before and/or after these resources. In some embodiments, the amount (e.g. number of OFDM symbols before and after the resources covering the DL PRS resources) of extra resources configured are based on UE capabilities. The extra resources are configured to give UE the needed time to process the measured DL PRSs in the reserved resource for DL PRS.

In another embodiment, reserved resources are defined in time domain, where one slot is reserved for PRS and another slot is used for CSI-RS. Further, the beam sweeping is designed in such a way that the beam sweeping is based upon PRS transmission from 1st beam and the 2nd beam is based upon CSI-RS. This can be done such that the antenna port transmitting DL-PRS is muted while the antenna port transmitting CSI-RS is enabled in alternate varying pattern so that UE obtains CSI-RS and DL-PRS in alternate varying fashion. UE is informed of the alternating pattern between two different RSs by configurations from LPP and/or RRC. In another embodiment, the CSI-RS and DL-PRS Resources are time multiplexed. That is, resources are shared in time domain such that they occur in alternate pattern or pattern such as 111000, where the first 3 slots are used for CSI-RS and another 3 slots are used for PRS reserved resources. In some cases, even the beam sweeping pattern as mentioned above can be depicted with pattern such as 111000; where beam sweeping of first 3 beams are based upon CSI-RS and last 3 are based upon PRS.

According to some of embodiments described herein, the UE can perform PDSCH/PDCCH decoding and perform positioning measurements with low latency without the need for measurement gaps. One potential advantage is the UE can measure other reference signals and perform positioning measurements with low latency without the need for measurement gaps. Hence, the embodiments described herein can help ensure simultaneous URLLC support and low latency positioning.

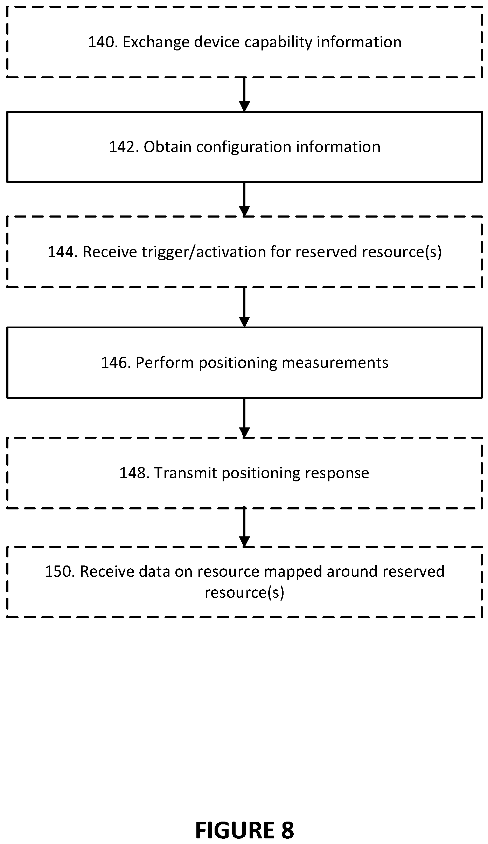

Figure 8 is a flow chart illustrating a method which can be performed in a wireless device, such as a UE 112 as described herein. The method can include:
Step 140: Optionally, the wireless device can exchange device capability information with an access node and/or a network node. The capabilities can include the UE's capability related to positioning functions such as performing measurements with or without a configured measurement gap. The capability information can include capabilities associated with PRS processing by the wireless device.
Step 142: The wireless device obtains configuration information. The configuration information can be received from an access node and/or a network node. In some embodiments, this includes receiving a configuration message (e.g. an RRC message, a MAC CE message and/or a DCI message) from an access node. In some embodiments, this includes receiving a configuration message (e.g. a LPP message) from a network node.

The configuration information can include at least one reserved resource for measuring one or more reference signal(s) (e.g. PRS) and for deriving positioning measurements. The configuration of the reserved resource(s) can include a length, a periodicity, an offset, a starting PRB, a bandwidth, an ending PRB, a starting symbol, a number of consecutive symbols, an end symbol, and/or other configuration parameters defining the position in frequency, time, and/or bandwidth of the reserved resource.

In some embodiments, the configuration information can indicate a priority between downlink data reception and PRS measurement in the reserved resource. The wireless device can determine that PRS measurement is prioritized in the reserved resource in accordance with the configuration information.

In some embodiments, the resources for data channels (e.g. PDSCH, PDCCH) and/or other reference signals (e.g. CSI-RS) can be mapped around the reserved resource(s) allocated for the PRS as has been described herein.

Step 144: Optionally, the wireless device can receive a trigger and/or an activation for a reserved resource. In some embodiments, the wireless device can receive a trigger for a configured aperiodic reserved resource. The trigger can be a DCI message received from the access node. In some embodiments, the wireless device can receive an activation for a configured semi-persistent reserved resource. The activation can be a MAC CE message received from the access node.

Step 146: The wireless device performs positioning measurements in accordance with the received configuration information and reserved resource(s). In some embodiments, the wireless device can perform positioning measurements without requesting measurement gap. This can include measuring at least one PRS in the reserved resource. In some embodiments, the wireless device can determine an estimated position of the wireless device in accordance with the positioning measurements.

Step 148: Optionally, the wireless device can transmit, to the access node or the network node, a positioning response/report. The positioning response can include an estimated position, positioning measurements, and/or other positioning related information. The positioning response can be based on positioning actions performed by the wireless device in accordance with the configuration information transmitted by the access node or network node and/or the exchanged capability information.

Step 150: Optionally, the wireless device can receive data, from the access node, on one or more resource(s) that are mapped around the reserved resource for positioning. For example, the wireless device can receive data on a PDSCH or PDDCH resource that does not overlap with the reserved resource for PRS.

It will be appreciated that in some embodiments, the wireless device can communicate (e.g. transmit/receive messages) directly with a network node such as location server 108. In other embodiments, messages and signals between the entities may be communicated via other nodes, such as radio access node (e.g. gNB, eNB) 110.

It will be appreciated that one or more of the above steps can be performed simultaneously and/or in a different order. Also, steps illustrated in dashed lines are optional and can be omitted in some embodiments.

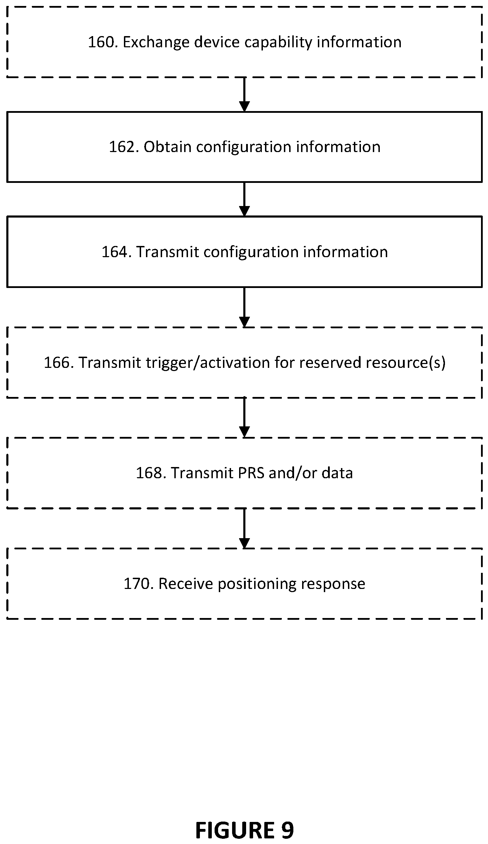

Figure 9 is a flow chart illustrating a method which can be performed in an access node, such as a gNB 110 as described herein. The method can include:
Step 160: Optionally, the access node can exchange device capability information with a wireless device and/or a network node. The capabilities can include the UE's capability related to positioning functions such as performing measurements with or without a configured measurement gap. The capability information can include capabilities associated with PRS processing by the wireless device.
Step 162: The access node obtains configuration information. The configuration information can be received from a network node such as a location server (LMF).

The configuration information can include at least one reserved resource for measuring one or more reference signal(s) (e.g. PRS) and for deriving positioning measurements. The configuration of the reserved resource(s) can include a length, a periodicity, an offset, a starting PRB, a bandwidth, an ending PRB, a starting symbol, a number of consecutive symbols, an end symbol, and/or other configuration parameters defining the position in frequency, time, and/or bandwidth of the reserved resource.

In some embodiments, the access node can configure resources for data channels (e.g. PDSCH, PDCCH) and/or other reference signals (e.g. CSI-RS) associated with the wireless device to be mapped around the reserved resource(s) allocated for the PRS, in accordance with the received configuration information.

Step 164: The access node transmits configuration information indicating one or more reserved resources. The configuration information can be transmitted to a wireless device. In some embodiments, this includes transmitting a configuration message (e.g. an RRC message, a MAC CE message and/or a DCI message). The configuration information can indicate that PRS measurement is prioritized in the reserved resource.

Step 166: Optionally, the access node can transmit a trigger and/or an activation for a reserved resource. In some embodiments, the access node can transmit a trigger for a configured aperiodic reserved resource. The trigger can be a DCI message transmitted to the wireless device. In some embodiments, the access node can transmit an activation for a configured semi-persistent reserved resource. The activation can be a MAC CE message transmitted to the wireless device.

Step 168: Optionally, the access node can transmit, to the wireless device, at least one PRS in the reserved resource, and/or data on one or more resource(s) that are mapped around the reserved resource(s) for positioning. For example, the access node can transmit data on a PDSCH or PDDCH resource that does not overlap with the reserved resource for PRS.

Step 170: Optionally, the access node can receive, from the wireless device, a positioning response/report. The positioning response can include an estimated position, positioning measurements, and/or other positioning related information. The positioning response can be based on positioning actions performed by the wireless device in accordance with the configuration information transmitted by the access node and/or the exchanged capability information. In some embodiments, the access node can determine an estimated position of the wireless device in accordance with the positioning response.

It will be appreciated that in some embodiments, the access node can communicate (e.g. transmit/receive messages) directly with a target wireless device 112. In other embodiments, messages and signals between the entities may be communicated via other nodes, such as other radio access node (e.g. gNB, eNB) 110.

It will be appreciated that one or more of the above steps can be performed simultaneously and/or in a different order. Also, steps illustrated in dashed lines are optional and can be omitted in some embodiments.

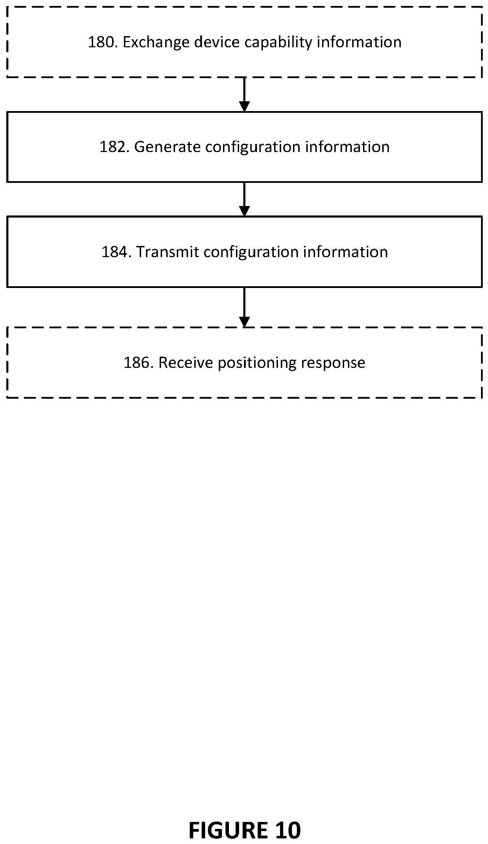

Figure 10 is a flow chart illustrating a method which can be performed in a network node, such as a location server (e.g. LMF 108) as described herein. The method can include:
Step 180: Optionally, the network node can exchange device capability information with a wireless device and/or an access node. The capabilities can include the UE's capability related to positioning functions such as performing measurements with or without a configured measurement gap. The capability information can include capabilities associated with PRS processing by the wireless device.
Step 182: The network node generates configuration information. The configuration information can include at least one reserved resource for measuring one or more reference signal(s) (e.g. PRS) and for deriving positioning measurements. The configuration of the reserved resource(s) can include a length, a periodicity, an offset, a starting PRB, a bandwidth, an ending PRB, a starting symbol, a number of consecutive symbols, an end symbol, and/or other configuration parameters defining the position in frequency, time, and/or bandwidth of the reserved resource.

In some embodiments, the network node can determine the reserved resource(s) for positioning based on one or more of: wireless device capabilities, the resources/resource sets the wireless device is configured to utilize for positioning measurements, a serving cell of the wireless device, and/or a position of the wireless device.

In some embodiments, the network node can generate the reserved resource(s) to include extra resources as has been described herein.

Step 184: The network node transmits the generated configuration information. The configuration information can be transmitted to an access node and/or a wireless device. Configuration information can be transmitted to the access node via NRPPa signaling and transmitted to the wireless device via LPP signaling.

Step 186: Optionally, the network node can receive, from the access node or the wireless device, a positioning response/report. The positioning response can include an estimated position, positioning measurements, and/or other positioning related information. The positioning response can be based on positioning actions performed by the wireless device in accordance with the configuration information transmitted by the access node and/or the exchanged capability information. In some embodiments, the network node can determine an estimated position of the wireless device in accordance with the positioning response.

It will be appreciated that in some embodiments, the network node can communicate (e.g. transmit/receive messages) directly with a target wireless device 112. In other embodiments, messages and signals between the entities may be communicated via other nodes, such as radio access node (e.g. gNB, eNB) 110.

It will be appreciated that one or more of the above steps can be performed simultaneously and/or in a different order. Also, steps illustrated in dashed lines are optional and can be omitted in some embodiments.

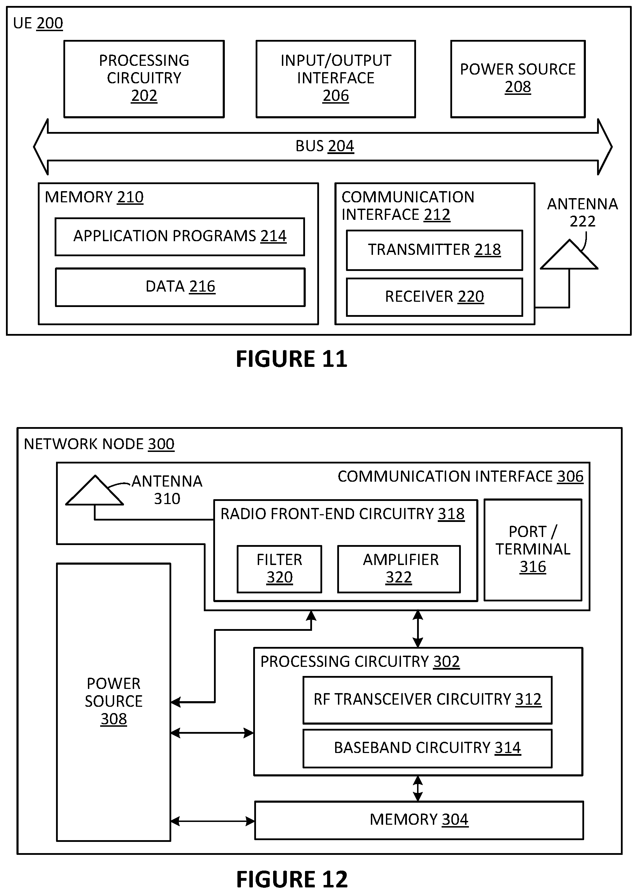

Figure 11 shows a UE 200, which may be an embodiment of the UE 112 of Figure 4 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 200 includes processing circuitry 202 that is operatively coupled via a bus 204 to an input/output interface 206, a power source 208, a memory 210, a communication interface 212, and/or any other component, or any combination thereof. Certain UEs may utilize all or a subset of the components shown in Figure 8. The level of integration between the components may vary from one UE to another UE. Further, certain UEs may contain multiple instances of a component, such as multiple processors, memories, transceivers, transmitters, receivers, etc.

The processing circuitry 202 is configured to process instructions and data and may be configured to implement any sequential state machine operative to execute instructions stored as machine-readable computer programs in the memory 210. The processing circuitry 202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 202 may include multiple central processing units (CPUs).

In the example, the input/output interface 206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 208 is structured as a battery or battery pack. Other types of power sources, such as an external power source (e.g., an electricity outlet), photovoltaic device, or power cell, may be used. The power source 208 may further include power circuitry for delivering power from the power source 208 itself, and/or an external power source, to the various parts of the UE 200 via input circuitry or an interface such as an electrical power cable. Delivering power may be, for example, for charging of the power source 208. Power circuitry may perform any formatting, converting, or other modification to the power from the power source 208 to make the power suitable for the respective components of the UE 200 to which power is supplied.

The memory 210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 210 includes one or more application programs 214, such as an operating system, web browser application, a widget, gadget engine, or other application, and corresponding data 216. The memory 210 may store, for use by the UE 200, any of a variety of various operating systems or combinations of operating systems.

The memory 210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 210 may allow the UE 200 to access instructions, application programs and the like, stored on transitory or non-transitory memory media, to off-load data, or to upload data. An article of manufacture, such as one utilizing a communication system may be tangibly embodied as or in the memory 210, which may be or comprise a device-readable storage medium.

The processing circuitry 202 may be configured to communicate with an access network or other network using the communication interface 212. The communication interface 212 may comprise one or more communication subsystems and may include or be communicatively coupled to an antenna 222. The communication interface 212 may include one or more transceivers used to communicate, such as by communicating with one or more remote transceivers of another device capable of wireless communication (e.g., another UE or a network node in an access network). Each transceiver may include a transmitter 218 and/or a receiver 220 appropriate to provide network communications (e.g., optical, electrical, frequency allocations, and so forth). Moreover, the transmitter 218 and receiver 220 may be coupled to one or more antennas (e.g., antenna 222) and may share circuit components, software or firmware, or alternatively be implemented separately.

In the illustrated embodiment, communication functions of the communication interface 212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 200 shown in Figure 11.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 12 shows a network node 300, which may be an embodiment of the access node 110 or the core network node 108 of Figure 4, in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 300 includes a processing circuitry 302, a memory 304, a communication interface 306, and a power source 308. The network node 300 may be composed of multiple physically separate components (e.g., a NodeB component and a RNC component, or a BTS component and a BSC component, etc.), which may each have their own respective components. In certain scenarios in which the network node 300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 300 may be configured to support multiple radio access technologies (RATs). In such embodiments, some components may be duplicated (e.g., separate memory 304 for different RATs) and some components may be reused (e.g., a same antenna 310 may be shared by different RATs). The network node 300 may also include multiple sets of the various illustrated components for different wireless technologies integrated into network node 300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 300.

The processing circuitry 302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 300 components, such as the memory 304, to provide network node 300 functionality.

In some embodiments, the processing circuitry 302 includes a system on a chip (SOC). In some embodiments, the processing circuitry 302 includes one or more of radio frequency (RF) transceiver circuitry 312 and baseband processing circuitry 314. In some embodiments, the radio frequency (RF) transceiver circuitry 312 and the baseband processing circuitry 314 may be on separate chips (or sets of chips), boards, or units, such as radio units and digital units. In alternative embodiments, part or all of RF transceiver circuitry 312 and baseband processing circuitry 314 may be on the same chip or set of chips, boards, or units.

The memory 304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 302. The memory 304 may store any suitable instructions, data, or information, including a computer program, software, an application including one or more of logic, rules, code, tables, and/or other instructions capable of being executed by the processing circuitry 302 and utilized by the network node 300. The memory 304 may be used to store any calculations made by the processing circuitry 302 and/or any data received via the communication interface 306. In some embodiments, the processing circuitry 302 and memory 304 is integrated.

The communication interface 306 is used in wired or wireless communication of signaling and/or data between a network node, access network, and/or UE. As illustrated, the communication interface 306 comprises port(s)/terminal(s) 316 to send and receive data, for example to and from a network over a wired connection. The communication interface 306 also includes radio front-end circuitry 318 that may be coupled to, or in certain embodiments a part of, the antenna 310. Radio front-end circuitry 318 comprises filters 320 and amplifiers 322. The radio front-end circuitry 318 may be connected to an antenna 310 and processing circuitry 302. The radio front-end circuitry may be configured to condition signals communicated between antenna 310 and processing circuitry 302. The radio front-end circuitry 318 may receive digital data that is to be sent out to other network nodes or UEs via a wireless connection. The radio front-end circuitry 318 may convert the digital data into a radio signal having the appropriate channel and bandwidth parameters using a combination of filters 320 and/or amplifiers 322. The radio signal may then be transmitted via the antenna 310. Similarly, when receiving data, the antenna 310 may collect radio signals which are then converted into digital data by the radio front-end circuitry 318. The digital data may be passed to the processing circuitry 302. In other embodiments, the communication interface may comprise different components and/or different combinations of components.

In certain alternative embodiments, the network node 300 does not include separate radio front-end circuitry 318, instead, the processing circuitry 302 includes radio front-end circuitry and is connected to the antenna 310. Similarly, in some embodiments, all or some of the RF transceiver circuitry 312 is part of the communication interface 306. In still other embodiments, the communication interface 306 includes one or more ports or terminals 316, the radio front-end circuitry 318, and the RF transceiver circuitry 312, as part of a radio unit (not shown), and the communication interface 306 communicates with the baseband processing circuitry 314, which is part of a digital unit (not shown).

The antenna 310 may include one or more antennas, or antenna arrays, configured to send and/or receive wireless signals. The antenna 310 may be coupled to the radio front-end circuitry 318 and may be any type of antenna capable of transmitting and receiving data and/or signals wirelessly. In certain embodiments, the antenna 310 is separate from the network node 300 and connectable to the network node 300 through an interface or port.

The antenna 310, communication interface 306, and/or the processing circuitry 302 may be configured to perform any receiving operations and/or certain obtaining operations described herein as being performed by the network node. Any information, data and/or signals may be received from a UE, another network node and/or any other network equipment. Similarly, the antenna 310, the communication interface 306, and/or the processing circuitry 302 may be configured to perform any transmitting operations described herein as being performed by the network node. Any information, data and/or signals may be transmitted to a UE, another network node and/or any other network equipment.

The power source 308 provides power to the various components of network node 300 in a form suitable for the respective components (e.g., at a voltage and current level needed for each respective component). The power source 308 may further comprise, or be coupled to, power management circuitry to supply the components of the network node 300 with power for performing the functionality described herein. For example, the network node 300 may be connectable to an external power source (e.g., the power grid, an electricity outlet) via an input circuitry or interface such as an electrical cable, whereby the external power source supplies power to power circuitry of the power source 308. As a further example, the power source 308 may comprise a source of power in the form of a battery or battery pack which is connected to, or integrated in, power circuitry. The battery may provide backup power should the external power source fail.

Embodiments of the network node 300 may include additional components beyond those shown in Figure 12 for providing certain aspects of the network node's functionality, including any of the functionality described herein and/or any functionality necessary to support the subject matter described herein. For example, the network node 300 may include user interface equipment to allow input of information into the network node 300 and to allow output of information from the network node 300. This may allow a user to perform diagnostic, maintenance, repair, and other administrative functions for the network node 300.

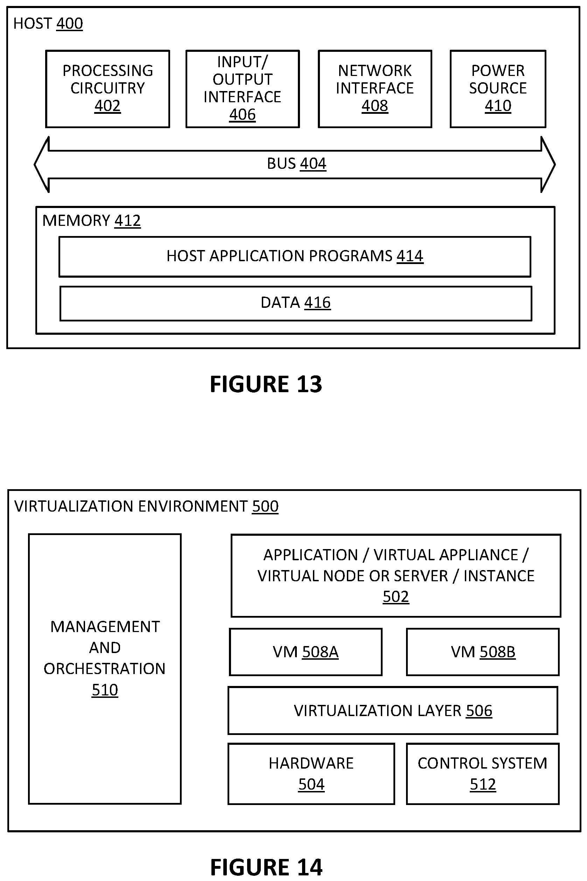

Figure 13 is a block diagram of a host 400, which may be an embodiment of the host 116 of Figure 4, in accordance with various aspects described herein. As used herein, the host 400 may be or comprise various combinations hardware and/or software, including a standalone server, a blade server, a cloud-implemented server, a distributed server, a virtual machine, container, or processing resources in a server farm. The host 400 may provide one or more services to one or more UEs.

The host 400 includes processing circuitry 402 that is operatively coupled via a bus 404 to an input/output interface 406, a network interface 408, a power source 410, and a memory 412. Other components may be included in other embodiments. Features of these components may be substantially similar to those described with respect to the devices of previous figures, such as Figures 8 and 9, such that the descriptions thereof are generally applicable to the corresponding components of host 400.

The memory 412 may include one or more computer programs including one or more host application programs 414 and data 416, which may include user data, e.g., data generated by a UE for the host 400 or data generated by the host 400 for a UE. Embodiments of the host 400 may utilize only a subset or all of the components shown. The host application programs 414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 414 may also provide for user authentication and licensing checks and may periodically report health, routes, and content availability to a central node, such as a device in or on the edge of a core network. Accordingly, the host 400 may select and/or indicate a different host for over-the-top services for a UE. The host application programs 414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 14 is a block diagram illustrating a virtualization environment 500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 502 (which may alternatively be called software instances, virtual appliances, network functions, virtual nodes, virtual network functions, etc.) are run in the virtualization environment 500 to implement some of the features, functions, and/or benefits of some of the embodiments disclosed herein.

Hardware 504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 506 (also referred to as hypervisors or virtual machine monitors (VMMs)), provide VMs 508a and 508b (one or more of which may be generally referred to as VMs 508), and/or perform any of the functions, features and/or benefits described in relation with some embodiments described herein. The virtualization layer 506 may present a virtual operating platform that appears like networking hardware to the VMs 508.

The VMs 508 comprise virtual processing, virtual memory, virtual networking or interface and virtual storage, and may be run by a corresponding virtualization layer 506. Different embodiments of the instance of a virtual appliance 502 may be implemented on one or more of VMs 508, and the implementations may be made in different ways. Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, a VM 508 may be a software implementation of a physical machine that runs programs as if they were executing on a physical, non-virtualized machine. Each of the VMs 508, and that part of hardware 504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 508 on top of the hardware 504 and corresponds to the application 502.

Hardware 504 may be implemented in a standalone network node with generic or specific components. Hardware 504 may implement some functions via virtualization. Alternatively, hardware 504 may be part of a larger cluster of hardware (e.g. such as in a data center or CPE) where many hardware nodes work together and are managed via management and orchestration 510, which, among others, oversees lifecycle management of applications 502. In some embodiments, hardware 504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 512 which may alternatively be used for communication between hardware nodes and radio units.

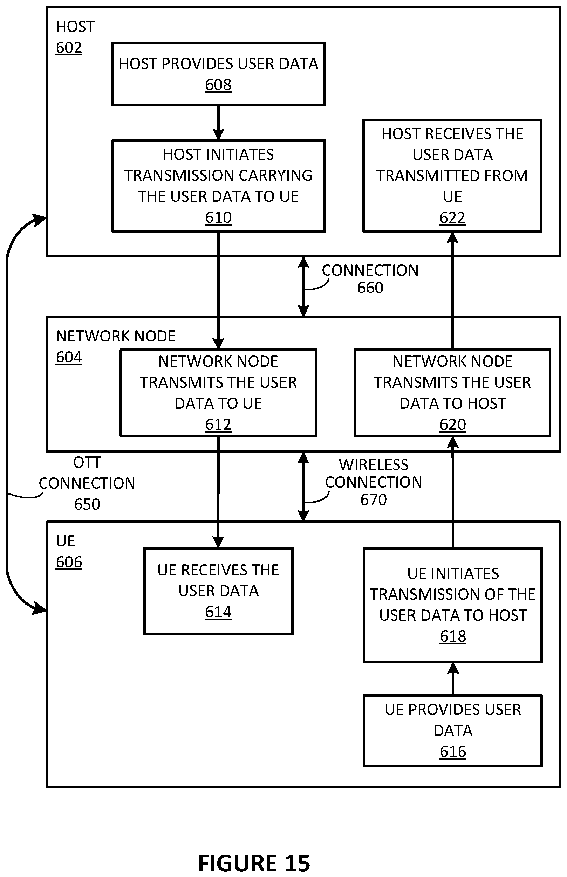

Figure 15 shows a communication diagram of a host 602 communicating via a network node 604 with a UE 606 over a partially wireless connection in accordance with some embodiments. Example implementations, in accordance with various embodiments, of the UE (such as a UE 112A of Figure 4 and/or UE 200 of Figure 8), network node (such as network node 110A of Figure 4 and/or network node 300 of Figure 9), and host (such as host 116 of Figure 4 and/or host 400 of Figure 10) discussed in the preceding paragraphs will now be described with reference to Figure 12.

Like host 400, embodiments of host 602 include hardware, such as a communication interface, processing circuitry, and memory. The host 602 also includes software, which is stored in or accessible by the host 602 and executable by the processing circuitry. The software includes a host application that may be operable to provide a service to a remote user, such as the UE 606 connecting via an over-the-top (OTT) connection 650 extending between the UE 606 and host 602. In providing the service to the remote user, a host application may provide user data which is transmitted using the OTT connection 650.

The network node 604 includes hardware enabling it to communicate with the host 602 and UE 606. The connection 660 may be direct or pass through a core network (like core network 106 of Figure 4) and/or one or more other intermediate networks, such as one or more public, private, or hosted networks. For example, an intermediate network may be a backbone network or the Internet.

The UE 606 includes hardware and software, which is stored in or accessible by UE 606 and executable by the UE's processing circuitry. The software includes a client application, such as a web browser or operator-specific "app" that may be operable to provide a service to a human or non-human user via UE 606 with the support of the host 602. In the host 602, an executing host application may communicate with the executing client application via the OTT connection 650 terminating at the UE 606 and host 602. In providing the service to the user, the UE's client application may receive request data from the host's host application and provide user data in response to the request data. The OTT connection 650 may transfer both the request data and the user data. The UE's client application may interact with the user to generate the user data that it provides to the host application through the OTT connection 650.

The OTT connection 650 may extend via a connection 660 between the host 602 and the network node 604 and via a wireless connection 670 between the network node 604 and the UE 606 to provide the connection between the host 602 and the UE 606. The connection 660 and wireless connection 670, over which the OTT connection 650 may be provided, have been drawn abstractly to illustrate the communication between the host 602 and the UE 606 via the network node 604, without explicit reference to any intermediary devices and the precise routing of messages via these devices.

As an example of transmitting data via the OTT connection 650, in step 608, the host 602 provides user data, which may be performed by executing a host application. In some embodiments, the user data is associated with a particular human user interacting with the UE 606. In other embodiments, the user data is associated with a UE 606 that shares data with the host 602 without explicit human interaction. In step 610, the host 602 initiates a transmission carrying the user data towards the UE 606. The host 602 may initiate the transmission responsive to a request transmitted by the UE 606. The request may be caused by human interaction with the UE 606 or by operation of the client application executing on the UE 606. The transmission may pass via the network node 604, in accordance with the teachings of the embodiments described throughout this disclosure. Accordingly, in step 612, the network node 604 transmits to the UE 606 the user data that was carried in the transmission that the host 602 initiated, in accordance with the teachings of the embodiments described throughout this disclosure. In step 614, the UE 606 receives the user data carried in the transmission, which may be performed by a client application executed on the UE 606 associated with the host application executed by the host 602.

In some examples, the UE 606 executes a client application which provides user data to the host 602. The user data may be provided in reaction or response to the data received from the host 602. Accordingly, in step 616, the UE 606 may provide user data, which may be performed by executing the client application. In providing the user data, the client application may further consider user input received from the user via an input/output interface of the UE 606. Regardless of the specific manner in which the user data was provided, the UE 606 initiates, in step 618, transmission of the user data towards the host 602 via the network node 604. In step 620, in accordance with the teachings of the embodiments described throughout this disclosure, the network node 604 receives user data from the UE 606 and initiates transmission of the received user data towards the host 602. In step 622, the host 602 receives the user data carried in the transmission initiated by the UE 606.

One or more of the various embodiments improve the performance of OTT services provided to the UE 606 using the OTT connection 650, in which the wireless connection 670 forms the last segment. More precisely, the teachings of these embodiments may improve the handling of colliding signals and/or channels and thereby provide benefits such as improving measurement latency and bypassing the measurement gap request procedure to improve positioning quality.

In an example scenario, factory status information may be collected and analyzed by the host 602. As another example, the host 602 may process audio and video data which may have been retrieved from a UE for use in creating maps. As another example, the host 602 may collect and analyze real-time data to assist in controlling vehicle congestion (e.g., controlling traffic lights). As another example, the host 602 may store surveillance video uploaded by a UE. As another example, the host 602 may store or control access to media content such as video, audio, VR or AR which it can broadcast, multicast or unicast to UEs. As other examples, the host 602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 650 between the host 602 and UE 606, in response to variations in the measurement results. The measurement procedure and/or the network functionality for reconfiguring the OTT connection may be implemented in software and hardware of the host 602 and/or UE 606. In some embodiments, sensors (not shown) may be deployed in or in association with other devices through which the OTT connection 650 passes; the sensors may participate in the measurement procedure by supplying values of the monitored quantities exemplified above, or supplying values of other physical quantities from which software may compute or estimate the monitored quantities. The reconfiguring of the OTT connection 650 may include message format, retransmission settings, preferred routing etc.; the reconfiguring need not directly alter the operation of the network node 604. Such procedures and functionalities may be known and practiced in the art. In certain embodiments, measurements may involve proprietary UE signaling that facilitates measurements of throughput, propagation times, latency and the like, by the host 602. The measurements may be implemented in that software causes messages to be transmitted, in particular empty or 'dummy' messages, using the OTT connection 650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
1x RTT CDMA2000 1x Radio Transmission Technology
3GPP 3rd Generation Partnership Project
5G 5th Generation
6G 6^{th} Generation
ABS Almost Blank Subframe
ARQ Automatic Repeat Request
AWGN Additive White Gaussian Noise
BCCH Broadcast Control Channel
BCH Broadcast Channel
CA Carrier Aggregation
CC Carrier Component
CCCH SDU Common Control Channel SDU
CDMA Code Division Multiplexing Access
CGI Cell Global Identifier
CIR Channel Impulse Response
CP Cyclic Prefix
CPICH Common Pilot Channel
CPICH Ec/No CPICH Received energy per chip divided by the power density in the band
CQI Channel Quality information
C-RNTI Cell RNTI
CSI Channel State Information
DCCH Dedicated Control Channel
DL Downlink
DM Demodulation
DMRS Demodulation Reference Signal
DRX Discontinuous Reception
DTX Discontinuous Transmission
DTCH Dedicated Traffic Channel
DUT Device Under Test
E-CID Enhanced Cell-ID (positioning method)
eMBMS evolved Multimedia Broadcast Multicast Services
E-SMLC Evolved-Serving Mobile Location Centre
ECGI Evolved CGI
eNB E-UTRAN NodeB
ePDCCH Enhanced Physical Downlink Control Channel
E-SMLC Evolved Serving Mobile Location Center
E-UTRA Evolved UTRA
E-UTRAN Evolved UTRAN
FDD Frequency Division Duplex
FFS For Further Study
gNB Base station in NR
GNSS Global Navigation Satellite System
HARQ Hybrid Automatic Repeat Request
HO Handover
HSPA High Speed Packet Access
HRPD High Rate Packet Data
LOS Line of Sight
LPP LTE Positioning Protocol
LTE Long-Term Evolution
MAC Medium Access Control
MAC Message Authentication Code
MBSFN Multimedia Broadcast multicast service Single Frequency Network
MBSFN ABS MBSFN Almost Blank Subframe
MDT Minimization of Drive Tests
MIB Master Information Block
MME Mobility Management Entity
MSC Mobile Switching Center
NPDCCH Narrowband Physical Downlink Control Channel
NR New Radio
OCNG OFDMA Channel Noise Generator
OFDM Orthogonal Frequency Division Multiplexing
OFDMA Orthogonal Frequency Division Multiple Access
OSS Operations Support System
OTDOA Observed Time Difference of Arrival
O&M Operation and Maintenance
PBCH Physical Broadcast Channel
P-CCPCH Primary Common Control Physical Channel
PCell Primary Cell
PCFICH Physical Control Format Indicator Channel
PDCCH Physical Downlink Control Channel
PDCP Packet Data Convergence Protocol
PDP Profile Delay Profile
PDSCH Physical Downlink Shared Channel
PGW Packet Gateway
PHICH Physical Hybrid-ARQ Indicator Channel
PLMN Public Land Mobile Network
PMI Precoder Matrix Indicator
PRACH Physical Random Access Channel
PRS Positioning Reference Signal
PSS Primary Synchronization Signal
PUCCH Physical Uplink Control Channel
PUSCH Physical Uplink Shared Channel
RACH Random Access Channel
QAM Quadrature Amplitude Modulation
RAN Radio Access Network
RAT Radio Access Technology
RLC Radio Link Control
RLM Radio Link Management
RNC Radio Network Controller
RNTI Radio Network Temporary Identifier
RRC Radio Resource Control
RRM Radio Resource Management
RS Reference Signal
RSCP Received Signal Code Power
RSRP Reference Symbol Received Power OR
Reference Signal Received Power
RSRQ Reference Signal Received Quality OR
Reference Symbol Received Quality
RSSI Received Signal Strength Indicator
RSTD Reference Signal Time Difference
SCH Synchronization Channel
SCell Secondary Cell
SDAP Service Data Adaptation Protocol
SDU Service Data Unit
SFN System Frame Number
SGW Serving Gateway
SI System Information
SIB System Information Block
SNR Signal to Noise Ratio
SON Self Optimized Network
SS Synchronization Signal
SSS Secondary Synchronization Signal
TDD Time Division Duplex
TDOA Time Difference of Arrival
TOA Time of Arrival
TSS Tertiary Synchronization Signal
TTI Transmission Time Interval
UE User Equipment
UL Uplink
USIM Universal Subscriber Identity Module
UTDOA Uplink Time Difference of Arrival
WCDMA Wide CDMA
WLAN Wide Local Area Network

## Claims

1. A method performed by a wireless device (112, 200), the method comprising:
receiving (142) a configuration message indicating one or more reserved resources, wherein the wireless device can both receive downlink data channels and other reference signals and perform positioning reference signal, PRS, measurements in the reserved resources without a configured measurement gap;
receiving (144) an activation message indicating to activate at least one of the reserved resources;
determining that PRS measurement is prioritized in the activated reserved resource; and
measuring (146) at least one PRS in the activated reserved resource.

2. The method of claim 1, wherein:
- the configuration message is a radio resource configuration, RRC, message; or
- the configuration message indicates at least one of: a frame number, a subframe number, a slot number, and/or a symbol number where the reserved resource starts; or
- the configuration message indicates at least one of: a length and/or a periodicity of the reserved resource; or
- the configuration message indicates a priority between the downlink data channels and other reference signals reception and the PRS measurement in the reserved resource.

3. The method of claim 1, wherein the downlink data channels and other reference signals include at least one of: a physical downlink shared channel, PDSCH, a physical downlink control channel, PDCCH, and/or a Channel State Information Reference Signal, CSI-RS.

4. The method of claim 1, wherein:
- the activation message is a Medium Access Control, MAC, control element, CE; or
- the activation message is a Downlink Control Information, DCI.

5. The method of claim 1, further comprising, receiving downlink channels/signals in resources outside of the activated reserved resource.

6. A computer-readable medium (210) comprising code portions which, when executed on a processor (202) of a wireless device (112, 200), configure the processor to perform the steps of a method according to any one of claims 1 to 5.

7. A wireless device (112, 200) comprising a radio interface and processing circuitry configured to perform all steps of a method according to any one of claims 1 to 5.

8. A method performed by an access node (110, 300), the method comprising:
generating (182) configuration information including one or more reserved resources, wherein a wireless device (112, 200) can both receive downlink data channels and other reference signals and perform positioning reference signal, PRS, measurements in the reserved resources without a configured measurement gap;
transmitting (184), to the wireless device, a configuration message indicating the one or more reserved resources;
transmitting, to the wireless device, an activation message indicating to activate at least one of the reserved resources; and
transmitting, to the wireless device, at least one PRS in the activated reserved resource.

9. The method of claim 8, wherein:
- the configuration message is a radio resource configuration, RRC, message; or
- the configuration message indicates at least one of: a frame number, a subframe number, a slot number, and/or a symbol number where the reserved resource starts; or
- the configuration message indicates at least one of: a length and/or a periodicity of the reserved resource; or
- the configuration message indicates a priority between the downlink data channels and other reference signals reception and the PRS measurement in the reserved resource.

10. The method of claim 8, wherein the downlink data channels and other reference signals includes at least one of: a physical downlink shared channel, PDSCH, a physical downlink control channel, PDCCH, and/or a Channel State Information Reference Signal, CSI-RS.

11. The method of claim 8, wherein:
- the activation message is a Medium Access Control, MAC, control element, CE; or
- the activation message is a Downlink Control Information, DCI.

12. The method of claim 8, further comprising, transmitting downlink channels/signals in resources outside of the activated reserved resource.

13. The method of claim 8, further comprising, receiving, from a network node, a request to configure the one or more reserved resources,
wherein, optionally, the request is received via NRPPa signaling.

14. A computer-readable medium (304) comprising code portions which, when executed on a processor (302) of an access node (110, 300), configure the processor to perform the steps of a method according to any one of claims 8 to 13.

15. An access node comprising a radio interface and processing circuitry configured to perform all steps of a method according to any one of claims 8 to 13.

## Patentansprüche

1. Verfahren, das von einer drahtlosen Vorrichtung (112, 200) durchgeführt wird, wobei das Verfahren Folgendes umfasst:
Empfangen (142) einer Konfigurationsnachricht, die eine oder mehrere reservierte Ressourcen angibt, wobei die drahtlose Vorrichtung in den reservierten Ressourcen ohne konfigurierte Messlücke sowohl Downlink-Datenkanäle und andere Referenzsignale empfangen als auch Messungen von Positionsbestimmungsreferenzsignalen, PRS, durchführen kann;
Empfangen (144) einer Aktivierungsnachricht, die angibt, dass mindestens eine der reservierten Ressourcen aktiviert werden soll;
Bestimmen, dass PRS-Messung in der aktivierten reservierten Ressource priorisiert ist; und
Messen (146) mindestens eines PRS in der aktivierten reservierten Ressource.

2. Verfahren nach Anspruch 1, wobei:
- die Konfigurationsnachricht eine Funkressourcenkonfigurationsnachricht, RRC-Nachricht, ist; oder
- die Konfigurationsnachricht mindestens eines von Folgenden angibt: eine Rahmennummer, eine Unterrahmennummer, eine Schlitznummer und/oder eine Symbolnummer, wo die reservierte Ressource beginnt; oder
- die Konfigurationsnachricht mindestens eines von Folgenden angibt: eine Länge und/oder eine Periodizität der reservierten Ressource; oder
- die Konfigurationsnachricht eine Priorität zwischen dem Empfang von Downlink-Datenkanälen und anderen Referenzsignalen und der PRS-Messung in der reservierten Ressource angibt.

3. Verfahren nach Anspruch 1, wobei die Downlink-Datenkanäle und anderen Referenzsignale mindestens eines von Folgenden umfassen: einen gemeinsamen physikalischen Downlink-Kanal, PDSCH, einen physikalischen Downlink-Steuerkanal, PDCCH, und/oder ein Kanalzustandsinformations-Referenzsignal, CSI-RS.

4. Verfahren nach Anspruch 1, wobei:
- die Aktivierungsnachricht ein Medienzugriffsteuerungs-,MAC-,Steuerelement, CE, ist; oder
- die Aktivierungsnachricht eine Downlink-Steuerinformation, DCI, ist.

5. Verfahren nach Anspruch 1, ferner umfassend Empfangen von Downlink-Kanälen/-Signalen in Ressourcen außerhalb der aktivierten reservierten Ressource.

6. Computerlesbares Medium (210), umfassend Codeabschnitte, die bei Ausführung auf einem Prozessor (202) einer drahtlosen Vorrichtung (112, 200) den Prozessor so konfigurieren, dass er die Schritte eines Verfahrens nach einem der Ansprüche 1 bis 5 ausführt.

7. Drahtlose Vorrichtung (112, 200), umfassend eine Funkschnittstelle und Verarbeitungsschaltungsanordnung, die zum Ausführen aller Schritte eines Verfahrens nach einem der Ansprüche 1 bis 5 konfiguriert ist.

8. Verfahren, das von einem Zugangsknoten (110, 300) durchgeführt wird, wobei das Verfahren Folgendes umfasst:
Erzeugen (182) von Konfigurationsinformationen, die eine oder mehrere reservierte Ressourcen angeben, wobei eine drahtlose Vorrichtung (112, 200) in den reservierten Ressourcen ohne konfigurierte Messlücke sowohl Downlink-Datenkanäle und andere Referenzsignale empfangen als auch Messungen von Positionsbestimmungsreferenzsignalen, PRS, durchführen kann;
Senden (184) einer Konfigurationsnachricht, die die eine oder die mehreren reservierten Ressourcen angibt, an die drahtlose Vorrichtung;
Senden einer Aktivierungsnachricht, die angibt, dass mindestens eine der reservierten Ressourcen aktiviert werden soll, an die drahtlose Vorrichtung; und
Senden mindestens eines PRS in der aktivierten reservierten Ressource an die drahtlose Vorrichtung.

9. Verfahren nach Anspruch 8, wobei:
- die Konfigurationsnachricht eine Funkressourcenkonfigurationsnachricht, RRC-Nachricht, ist;
- die Konfigurationsnachricht mindestens eines von Folgenden angibt: eine Rahmennummer, eine Unterrahmennummer, eine Schlitznummer und/oder eine Symbolnummer, wo die reservierte Ressource beginnt; oder
- die Konfigurationsnachricht mindestens eines von Folgenden angibt: eine Länge und/oder eine Periodizität der reservierten Ressource; oder
- die Konfigurationsnachricht eine Priorität zwischen dem Empfang von Downlink-Datenkanälen und anderen Referenzsignalen und der PRS-Messung in der reservierten Ressource angibt.

10. Verfahren nach Anspruch 8, wobei die Downlink-Datenkanäle und anderen Referenzsignale mindestens eines von Folgenden umfassen: einen gemeinsamen physikalischen Downlink-Kanal, PDSCH, einen physikalischen Downlink-Steuerkanal, PDCCH, und/oder ein Kanalzustandsinformations-Referenzsignal, CSI-RS.

11. Verfahren nach Anspruch 8, wobei:
- die Aktivierungsnachricht ein Medienzugriffsteuerungs-,MAC-,Steuerelement, CE, ist; oder
- die Aktivierungsnachricht eine Downlink-Steuerinformation, DCI, ist.

12. Verfahren nach Anspruch 8, ferner umfassend Senden von Downlink-Kanälen/-Signalen in Ressourcen außerhalb der aktivierten reservierten Ressource.

13. Verfahren nach Anspruch 8, ferner umfassend Empfangen einer Anforderung zum Konfigurieren der einen oder der mehreren reservierten Ressourcen von einem Netzwerkknoten,
wobei optional die Anforderung über NRPPa-Signalisierung empfangen wird.

14. Computerlesbares Medium (304), umfassend Codeabschnitte, die bei Ausführung auf einem Prozessor (302) eines Zugangsknotens (110, 300) den Prozessor so konfigurieren, dass er die Schritte eines Verfahrens nach einem der Ansprüche 8 bis 13 ausführt.

15. Zugangsknoten, umfassend eine Funkschnittstelle und Verarbeitungsschaltungsanordnung, die zum Ausführen aller Schritte eines Verfahrens nach einem der Ansprüche 8 bis 13 konfiguriert ist.

## Revendications

1. Procédé réalisé par un dispositif sans fil (112, 200), le procédé comprenant :
la réception (142) d'un message de configuration indiquant une ou plusieurs ressources réservées, dans lequel le dispositif sans fil peut à la fois recevoir des canaux de données de liaison descendante et d'autres signaux de référence et réaliser des mesures de signal de référence de positionnement, PRS, dans les ressources réservées sans aucun espace de mesure configuré ;
la réception (144) d'un message d'activation indiquant d'activer au moins l'une des ressources réservées ;
la détermination qu'une mesure de PRS est priorisée dans la ressource réservée activée ; et
la mesure (146) d'au moins un PRS dans la ressource réservée activée.

2. Procédé selon la revendication 1, dans lequel :
- le message de configuration est un message de configuration de ressources radio, RRC ; ou
- le message de configuration indique au moins l'un parmi : un numéro de trame, un numéro de sous-trame, un numéro de créneau et/ou un numéro de symbole où commence la ressource réservée ; ou
- le message de configuration indique au moins l'une parmi : une longueur et/ou une périodicité de la ressource réservée ; ou
- le message de configuration indique une priorité entre la réception de canaux de données de liaison descendante et d'autres signaux de référence et la mesure de PRS dans la ressource réservée.

3. Procédé selon la revendication 1, dans lequel les canaux de données de liaison descendante et d'autres signaux de référence incluent au moins l'un parmi : un canal partagé de liaison descendante physique, PDSCH, un canal de commande de liaison descendante physique, PDCCH, et/ou un signal de référence d'informations d'état de canal, CSI-RS.

4. Procédé selon la revendication 1, dans lequel :
- le message d'activation est un élément de commande, CE, de commande d'accès au support, MAC ; ou
- le message d'activation est des informations de commande de liaison descendante, DCI.

5. Procédé selon la revendication 1, comprenant en outre la réception de canaux/signaux de liaison descendante dans des ressources à l'extérieur de la ressource réservée activée.

6. Support lisible par ordinateur (210) comprenant des parties de code qui, lorsqu'elles sont exécutées sur un processeur (202) d'un dispositif sans fil (112, 200), configurent le processeur pour réaliser les étapes d'un procédé selon l'une quelconque des revendications 1 à 5.

7. Dispositif sans fil (112, 200) comprenant une interface radio et une circuiterie de traitement configurées pour réaliser toutes les étapes d'un procédé selon l'une quelconque des revendications 1 à 5.

8. Procédé réalisé par un nœud d'accès (110, 300), le procédé comprenant :
la génération (182) d'informations de configuration incluant une ou plusieurs ressources réservées, dans lequel un dispositif sans fil (112, 200) peut à la fois recevoir des canaux de données de liaison descendante et d'autres signaux de référence et réaliser des mesures de signal de référence de positionnement, PRS, dans les ressources réservées sans aucun espace de mesure configuré ;
la transmission (184), au dispositif sans fil, d'un message de configuration indiquant les une ou plusieurs ressources réservées ;
la transmission, au dispositif sans fil, d'un message d'activation indiquant d'activer au moins l'une des ressources réservées ; et
la transmission, au dispositif sans fil, d'au moins un PRS dans la ressource réservée activée.

9. Procédé selon la revendication 8, dans lequel :
- le message de configuration est un message de configuration de ressources radio, RRC ; ou
- le message de configuration indique au moins l'un parmi : un numéro de trame, un numéro de sous-trame, un numéro de créneau et/ou un numéro de symbole où commence la ressource réservée ; ou
- le message de configuration indique au moins l'une parmi : une longueur et/ou une périodicité de la ressource réservée ; ou
- le message de configuration indique une priorité entre la réception de canaux de données de liaison descendante et d'autres signaux de référence et la mesure de PRS dans la ressource réservée.

10. Procédé selon la revendication 8, dans lequel les canaux de données de liaison descendante et d'autres signaux de référence incluent au moins l'un parmi : un canal partagé de liaison descendante physique, PDSCH, un canal de commande de liaison descendante physique, PDCCH, et/ou un signal de référence d'informations d'état de canal, CSI-RS.

11. Procédé selon la revendication 8, dans lequel :
- le message d'activation est un élément de commande, CE, de commande d'accès au support, MAC ; ou
- le message d'activation est des informations de commande de liaison descendante, DCI.

12. Procédé selon la revendication 8, comprenant en outre la transmission de canaux/signaux de liaison descendante dans des ressources à l'extérieur de la ressource réservée activée.

13. Procédé selon la revendication 8, comprenant en outre la réception, depuis un nœud de réseau, d'une demande de configuration des une ou plusieurs ressources réservées,
dans lequel, facultativement, la demande est reçue via une signalisation NRPPa.

14. Support lisible par ordinateur (304) comprenant des parties de code qui, lorsqu'elles sont exécutées sur un processeur (302) d'un nœud d'accès (110, 300), configurent le processeur pour réaliser les étapes d'un procédé selon l'une quelconque des revendications 8 à 13.

15. Nœud d'accès comprenant une interface radio et une circuiterie de traitement configurées pour réaliser toutes les étapes d'un procédé selon l'une quelconque des revendications 8 à 13.
